(19) Europäisches Patentamt
European Patent Office
Office européen des brevets

(11) Numéro de publication: **0 099 488**
**A2**

(12) # DEMANDE DE BREVET EUROPEEN

(21) Numéro de dépôt: **83106209.6**

(22) Date de dépôt: **25.06.83**

(51) Int. Cl.³: **C 09 K 3/34**
**G 02 F 1/137**

(30) Priorité: **13.07.82 CH 4255/82**

(43) Date de publication de la demande:
**01.02.84 Bulletin 84/5**

(84) Etats contractants désignés:
**DE FR GB**

(71) Demandeur: **ASULAB S.A.**
**Faubourg du Lac 6**
**CH-2502 Bienne(CH)**

(72) Inventeur: **Cognard, Jacques**
**Rue du Suchiez 53**
**CH-2006 Neuchatel(CH)**

(72) Inventeur: **Basturk, Abdurrahman Naci**
**Marnière 71**
**CH-2068 Hauterive, Neuchâtel(CH)**

(74) Mandataire: **Micheli, Michel Pierre et al,**
**MICHELI & CIE 118, Rue du Rhône Case Postale 47**
**CH-1211 Geneve 6(CH)**

(54) **Composition de cristaux liquides notamment pour dispositif électro-optique.**

(57) Elle comporte une matrice contenant au moins un composé (I), où R,Z,X et Y sont tels que définis dans la revendication 1 et de 1 à 30% d'un additif servant de dopant et contenant au moins un composé de formule (II), où Z',A,B sont également tels que définis dans la revendication 1.

Cette composition de cristaux liquides est plus particulièrement utile pour la réalisation de cellules d'affichage à contraste positif en les mélangeant avec un ou plusieurs colorants dichroïques.

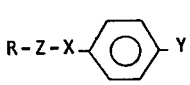

(I)

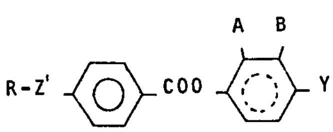

(II)

EP 0 099 488 A2

Composition de cristaux liquides notamment pour dispositif électro-optique

La présente invention se rapporte à une nouvelle composition de cristaux liquides à anisotropie diélectrique négative, notamment pour dispositif électro-optique, par exemple pour dispositif d'affichage.

Pour qu'il puisse être utilisé de manière appropriée et satisfaisante dans un dispositif électro-optique, un mélange de cristaux liquides doit présenter les caractéristiques suivantes :

- une faible tension de seuil capacitive,
- une large plage nématique,
- une faible viscosité, et
- une parfaite stabilité chimique et photochimique, notamment une faible sensibilité aux rayons UV.

De plus, lorsque le mélange de cristaux liquides est destiné à être utilisé par exemple dans une cellule d'affichage, et qu'il contient alors un colorant, par exemple un colorant dichroïque, alors il doit encore être susceptible de dissoudre ledit colorant et surtout de conférer à la composition un paramètre d'ordre élevé, afin qu'un affichage à contraste élevé soit obtenu.

On connaît déjà des mélanges de cristaux liquides à base de composés répondant à la formule générale suivante:

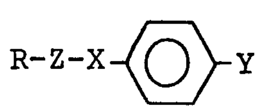

dans laquelle R est une chaîne aliphatique, Z est un groupe benzyle ou cyclohexyle, X est -COO ou 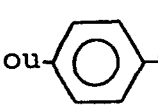COO, et Y est R' ou OR', où R' est une chaîne aliphatique. Ces mélanges, commercialisés par exemple sous les appellations ZLI 1275 (Merck) et N24 (Chisso) sont relativement stables photochimiquement, mais présentent une tension de seuil voisine de 4V, ce qui les rend inutilisables en pratique pour les usages mentionnés précédemment.

Il existe également sur le marché un mélange comportant comme matrice un mélange de cristaux liquides tel que celui précité, associée à un dopant ayant la formule suivante :

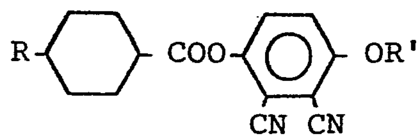

dans laquelle R et R' sont des chaînes aliphatiques. Ce produit dénommé EN24 (Chisso) présente une faible tension de seuil ($U_{seuil} = 1,5$ V), mais est par contre photochimiquement instable et par conséquent également inapproprié pour un usage tel que celui mentionné précédemment, étant de plus trop visqueux.

De même, des compositions obtenues en mélangeant N24 et EN24 se sont révélées également insatisfaisantes, l'instabilité photochimique du second se répercutant sur le mélange.

Par conséquent, le but de la présente invention consiste à fournir une composition de cristaux liquides qui tende à obvier aux inconvénients précités des mélanges connus et qui soit donc à la fois stable photochimiquement, avec une tension de seuil faible, et permettant d'obtenir un paramètre d'ordre élevé en présence d'un colorant.

La composition de cristaux liquides selon l'invention, visant à atteindre le but ci-dessus, est caractérisé par le fait qu'elle comporte une matrice contenant au moins un composé de formule (I)

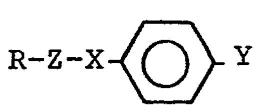

(I)

dans laquelle R est une chaîne aliphatique; Z est un groupe

phényle ou cyclohexyle; X est -COO, 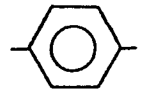 COO, 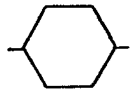 COO, OOC-, OOC 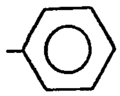 ou OOC 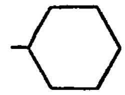 ; et Y est OR' ou R', où R' est une chaîne aliphatique, ainsi qu'un additif contenant au moins un composé de formule (II),

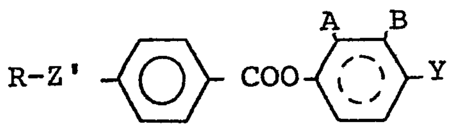 (II)

où R et Y sont comme définis ci-dessus; Z' est un groupe phényle ou cyclohexyle, ou un groupe 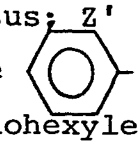 COO ou 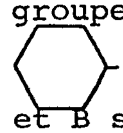 COO; 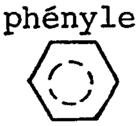 est un noyau phényle ou cyclohexyle; et A et B sont chacun un atome d'hydrogène, un groupe cyano ou un groupe nitro, au moins un des A et B étant un groupe cyano ou un groupe nitro.

Un autre objet de l'invention consiste en l'utilisation de la composition ci-dessus pour la réalisation de cellules d'affichage dichroïque à contraste positif, en associant ladite composition à un colorant dichroïque.

Dans la définition des formules (I) et (II), les chaînes aliphatiques R et R' sont de préférence des chaînes alkyle ou alkoxy.

Les présents inventeurs ont en effet mis en évidence de manière inattendue que la présence d'un troisième cycle dans la formule chimique de l'additif tendait à conférer au mélange les caractéristiques de stabilité et de tension de seuil souhaitées.

Le dessin annexé représente un graphique illustrant le résultat de tests de stabilité UV.

L'invention sera maintenant illustrée en référence aux exemples suivants :

Exemple 1

Une première série de mélanges de cristaux liquides selon l'invention a été préparée en mélangeant d'une part comme constituant de base un mélange dénommé ALN-29 et contenant les composés suivants :

ALN-29: 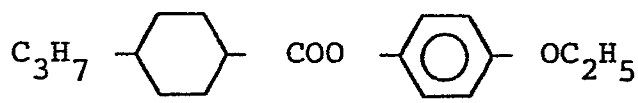 12,12 % poids

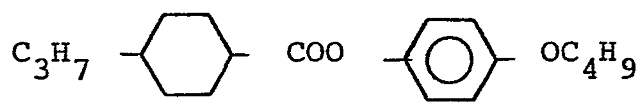 36,16 % poids

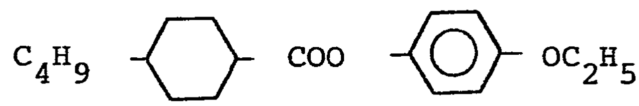 22,92 % poids

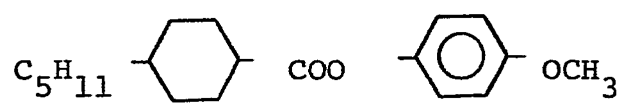 23,9 % poids

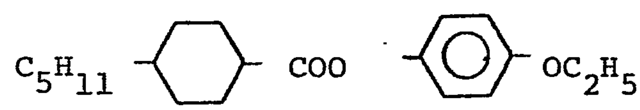 8,71 % poids

et d'autre part comme agent dopant le mélange eutectique suivant, dénommé ALN 70 :

ALN-70: 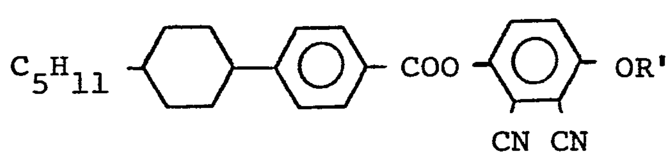

où R' = $C_4H_9$ ou $C_5H_{11}$ (mélange eutectique)

Trois mélanges ont été préparés avec une proportion du dopant ALN-70 respectivement de 4% mol. (ALN-75), 8,5% mol. (ALN-76) et 17% mol. (ALN-77).

Les propriétés physiques, à savoir la température de transition nématique-isotropique ($T_{ni}$), la viscosité à 20°C ($\eta$) et la tension de seuil capacitive (U), ont été

mesurées et reportées sur le Tableau 1. La tension de seuil correspond au début de l'augmentation de la capacité mesurée qui est dû à un changement d'orientation du cristal liquide; la variation de la capacité d'une cellule est mesurée en fonction de la tension appliquée, cellule dans laquelle le liquide est aligné de façon homéotrope (le directeur nématique étant alors perpendiculaire aux parois de la cellule) au moyen d'un agent surfactant (par exemple la lécithine).

A titre de référence et de comparaison, la mesure des propriétés physiques a également été effectuée pour le constituant de base ALN-29 seul.

Exemple 2

Une seconde série de mélanges de cristaux liquides selon l'invention a été préparée à partir d'un constituant de base constitué par un mélange commercial de phénylcyclohexanes vendu par Merck sous la dénomination ZLI 1275, et en utilisant comme dopant le ALN-70 décrit dans l'exemple 1.

Trois mélanges ont été préparés avec une proportion du dopant ALN-70 respectivement de 4% mol. (ALN-71), de 8% mol. (ALN-72) et du 12% mol. (ALN-73).

Comme dans l'exemple 1, les propriétés physiques de ces mélanges, ainsi que celles du constituant de base ZLI 1275, ont été mesurées et reportées dans le Tableau 1.

Ainsi qu'il ressort du Tableau 1, les mélanges selon l'invention présentent une tension de seuil capacitive inférieure à 3V, ce qui est une valeur suffisamment faible en vue d'une utilisation dans un affichage électro-optique. De plus, les valeurs de la viscosité sont également appropriées dans le but précité, à part les mélanges où le % molaire est le plus élevé (ALN-77 et ALN-73) qui sont plus visqueux.

<u>Tableau</u> 1 : Propriétés physiques des mélanges de cristaux liquides

| C.L. | $T_{ni}$ °C | $\eta$ (cP, 20°C) | U seuil (V) |
|---|---|---|---|
| ALN-29 (Réf.) | 73,6 | 18,9 | 3,2 |
| ALN-75 | 76,8 | 28,2 | 2,5 |
| ALN-76 | 80,6 | 40,0 | 2,15 |
| ALN-77 | 87,5 | visqueux | 1,65 |
| ZLI 1275 (Réf.) | 82 | 36 | 4,1 |
| ALN-71 | 84,8 | 47,4 | 2,8 |
| ALN-72 | 87,2 | 73,7 | 2,35 |
| ALN-73 | 89 | - | 1,8 |

<u>Exemple</u> 3

Deux des mélanges selon l'invention, à savoir ALN-71 et ALN-76, ont été soumis à un test de stabilité à la lumière UV, de même que trois autres mélanges à titre de comparaison. Les trois mélanges de comparaison étaient d'une part le mélange commercial EN 24 (Chisso) et d'autre part les deux mélanges suivants :

<u>ALN-64</u>: 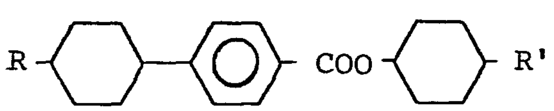 94%

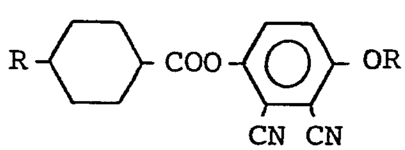 6%

ALN-66: ALN-29 88%

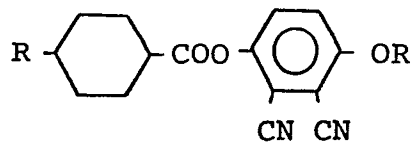 12%

Le test de stabilité à la lumière a été effectué par une méthode connue, décrite notamment par J. Cognard et T.Hieu Phan dans Mol. Cryst. Liq. Cryst. 70, p. 1279, 1970, et utilisant un appareil "SUN TEST" (Leybold-Heraeus) après avoir muni les différents mélanges testés d'une laque de protection.

Les résultats de ces tests ont été reportés sous la forme d'un graphique sur le dessin annexé représentant la densité de courant I traversant la cellule de mesure sous 3V et 32 Hz en fonction du temps. Ce graphique montre clairement que les deux mélanges (ALN-71 et ALN-76) selon l'invention sont de loin beaucoup plus stables que les trois mélanges tests qui contiennent comme dopants des composés se différenciant du dopant selon l'invention par la présence de deux seuls cycles. Le troisième cycle lié à un autre cycle confère donc au dopant et par là au mélange le contenant des propriétés de stabilité inattendues.

Exemple 4

Afin d'étudier la possibilité d'utiliser les mélanges selon l'invention en combinaison avec des molécules dichroïques, en vue de réaliser des cellules d'affichage à contraste positif (sombre sur fond clair), on a mesuré le paramètre d'ordre obtenu avec deux mélanges selon l'invention (ALN-76 et ALN-71) associés à différents colorants azoïques, à savoir 1902 (rouge) et 1914 (jaune) de CIBA-GEIGY A.G., et anthraquinoniques, à savoir P78, P85 et P104 (bleu), P 148 (bleu), et P 67 (rouge) de EBAUCHES S.A.

A titre de comparaison, la mesure du paramètre d'ordre a également été effectuée en utilisant comme mélanges de cristaux liquides les mélanges commerciaux EN24 (Chisso) et ZLI 1275 (Merck) et le mélange ALN-66 déjà définis.

Les résultats obtenus sont résumés dans le Tableau 2 suivant :

Tableau 2 : Paramètre d'ordre de mélanges de cristaux liquides associés à des colorants

| Colorant | EN24 | ZLI 1275 | ALN-66 | ALN-76 | ALN-71 |
|---|---|---|---|---|---|
| P85 | 0,65 | 0,68 | 0,66 | 0,73 | 0,71 |
| P78 | 0,66 | 0,65 | 0,66 | 0,70 | 0,70 |
| P104 | 0,64 | 0,68 | 0,65 | 0,70 | - |
| P148 | 0,60 | 0,65 | 0,65 | 0,70 | - |
| P67 | - | 0,57 | - | 0,60 | - |
| 1902 | 0,76 | 0,78 | 0,73 | 0,80 | 0,77 |
| 1914 | 0,77 | 0,73 | 0,72 | 0,78 | 0,76 |

Comme on peut le constater à la lecture des résultats ci-dessus, les mélanges ALN-76 et ALN-71 selon l'invention permettent d'obtenir des paramètres d'ordre supérieurs à ceux obtenus avec les autres mélanges testés, ceci pour tous les colorants essayés.

Exemple 5

La comparaison des caractéristiques des mélanges de cristaux liquides ALN-76 et ALN-71 (invention) et EN-24 (Chisso) a été effectuée dans une cellule d'affichage à contraste positif, telle que celle décrite dans le brevet US 4 281903.

On a mesuré dans les deux cas le contraste, la

brillance et le temps de réponse. Le contraste et la brillance sont obtenus par les équations suivantes :

$$\text{contraste} = \left(1 - \frac{I_C}{I_{NC}}\right) . 100$$

$$\text{brillance} = \frac{I_{NC}}{I^*} . 100$$

où

- $I_C$ et $I_{NC}$ sont respectivement l'intensité de la lumière réfléchie correspondant à l'état connecté et à l'état non connecté;

- $I^*$ est l'intensité de la lumière réfléchie correspondant à un réflecteur blanc.

En ce qui concerne le temps de réponse, le $t_{on}$ correspond au temps nécessaire pour parvenir à 90% de la variation de la transmission sous une tension de 4,5 V et avec d/p = 0,7, où "d" est l'épaisseur de la cellule (en µm) et "p" est le pas de l'agent chirale (en µm), alors que le $t_{off}$ correspond au temps au bout duquel la transmission tombe à 50% de sa valeur lorsqu'on coupe la tension appliquée (4,5 V et d/p = 0,7).

Les résultats obtenus sont donnés dans le Tableau 3 ci-dessous :

Tableau 3 : Caractéristique des mélanges de cristaux liquides dans un affichage.

| Caractéristiques | EN-24 | ALN-76 | ALN-71 |
|---|---|---|---|
| Contraste (V=4,5V) | 51 | 53 | - |
| Brillance | 45 | 50 | - |
| Temps de réponse { $t_{on}$ | 60 | 90 | 260 |
| (ms) { $t_{off}$ | 400 | 150 | 140 |

Les résultats ci-dessus montrent donc que le contraste et la brillance obtenues avec un mélange selon l'invention (ALN-76) dans un affichage sont plus favorables que celles obtenues avec le mélange commercial EN-24 de Chisso. En ce qui concerne les temps de réponse, on constate que l'affichage ($t_{on}$) est plus rapide avec EN-24, par contre l'effacement avec ALN-76 et ALN-71 est beaucoup plus rapide. Or, c'est justement le temps d'effacement qui est déterminant dans un affichage électro-optique, l'utilisation des mélanges ALN-76 et ALN-71 selon l'invention permettant de réduire ce temps d'effacement de plus de la moitié.

REVENDICATIONS

1. Composition de cristaux liquides à anisotropie négative notamment pour dispositif électro-optique, caractérisée par le fait qu'elle comporte une matrice contenant au moins un composé de formule (I)

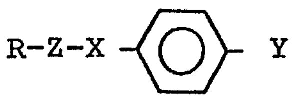 (I)

dans laquelle R est une chaîne aliphatique, Z est un groupe phényle ou cyclohexyle, X est -COO, 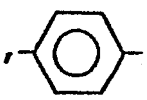 COO, 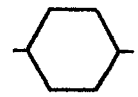 COO, OOC-, OOC 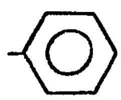 ou OOC 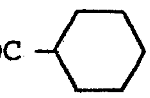 ; et Y est OR' ou R', où R' est une chaîne aliphatique, ainsi qu'un additif contenant au moins un composé de formule (II),

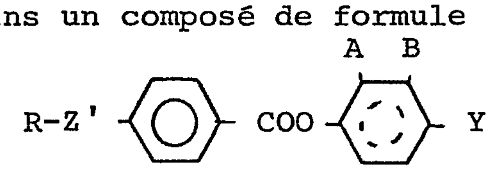 (II)

où R et Y sont comme définis ci-dessus; Z' est un groupe phényle ou cyclohexyle ou un groupe 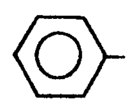 COO ou 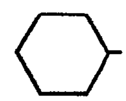 COO; 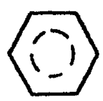 est un noyau phényle ou cyclohexyle; et A et B sont chacun un atome d'hydrogène, un groupe cyano ou un groupe nitro, au moins un des A et B étant un groupe cyano ou un groupe nitro.

2. Composition selon la revendication 1, caractérisée par le fait qu'elle contient de 1 à 30 % de l'additif.

3. Composition selon la revendication 1 ou la revendication 2, caractérisée par le fait que R et R' sont des groupes alkyle ayant de 1 à 8 atomes de C.

4. Composition selon l'une des revendications 1 à 3, caractérisée par le fait que l'additif est un mélange eutectique des deux composés suivants :

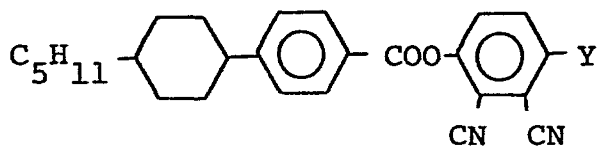

où Y est $OC_4H_9$ pour le premier composé et $OC_5H_{11}$ pour le second.

5. Composition selon la revendication 4, caractérisée par le fait que la matrice est un mélange de composés de formule (I) dans laquelle Z est un groupe cyclohexyle et X est -COO, avec R et Y étant respectivement $C_3H_7$ et $OC_2H_5$, $C_3H_7$ et $OC_4H_9$, $C_4H_9$ et $OC_2H_5$, $C_5H_{11}$ et $OCH_3$, et $C_5H_{11}$ et $OC_2H_5$, et par le fait que la proportion molaire d'additif est comprise entre 4 et 17 %.

6. Utilisation de la composition de cristaux liquides selon l'une des revendications précédentes pour la réalisation d'une cellule d'affichage à contraste positif, caractérisée par le fait qu'on incorpore à ladite composition un ou plusieurs colorants dichroïques.

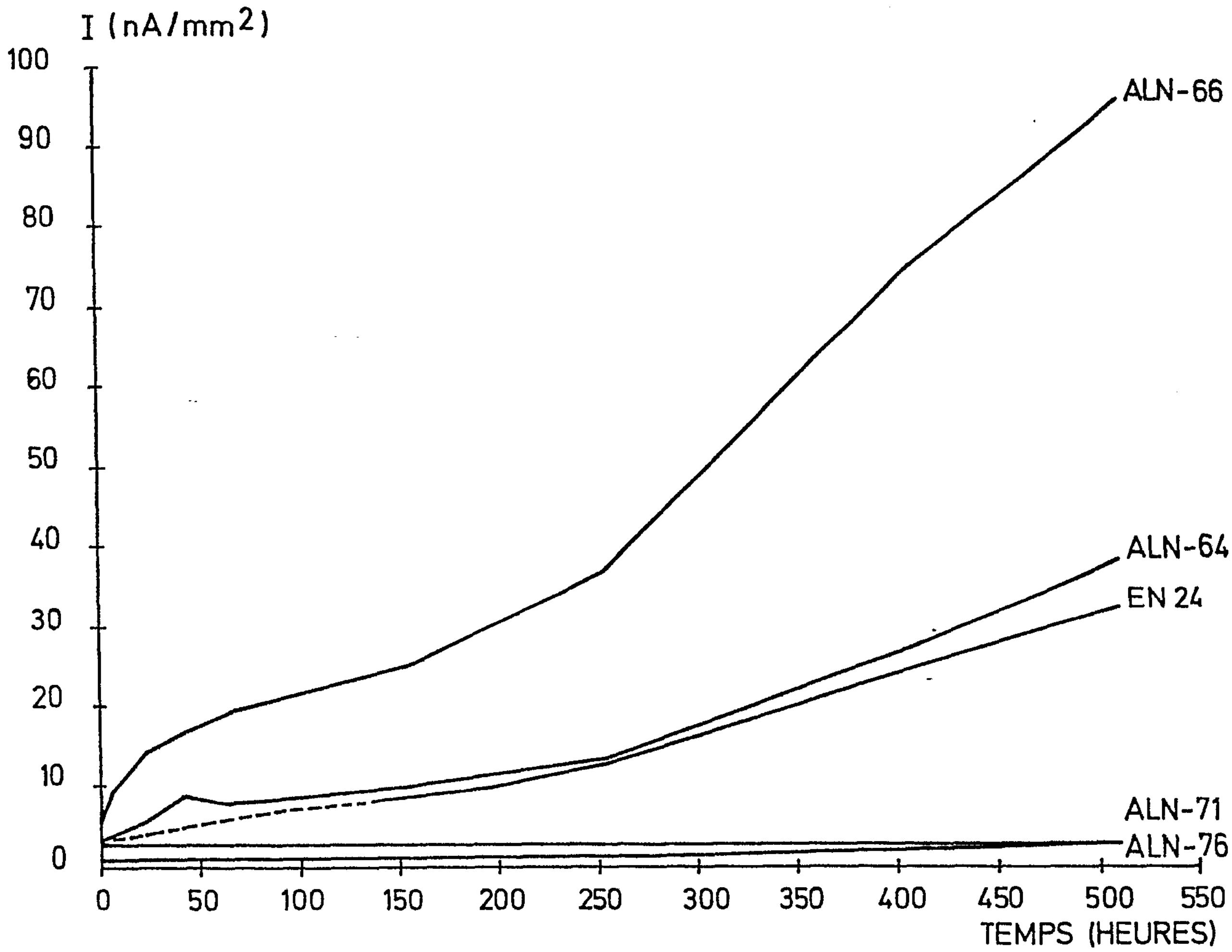
I (nA/mm2)
100
90
80
70
60
50
40
30
20
10
0
ALN-66
ALN-64
EN 24
ALN-71
ALN-76
0
50
100
150
200
250
300
350
400
450
500
550
TEMPS (HEURES)